# EUROPEAN PATENT SPECIFICATION

(11) **EP 1 775 089 B1**
(45) Date of publication and mention of the grant of the patent: **12.08.2009**
(21) Application number: 05425722.5
(22) Date of filing: 14.10.2005
(51) Int. Cl.: B28B 1/26, B28B 17/00, B29C 33/30, B30B 15/02

(54) **Support equipment for a die for a pressure die casting machine and method for adjusting the position of said die**
Stützvorrichtung für eine Giessform in einer Druckgiessmaschine und Verfahren zum Anpassen der Position der Giessform
Dispositif de support pour un moule dans une machine à couler sous pression et méthode pour l'ajustement de la position du moule

(43) Date of publication of application: 18.04.2007
(73) Proprietor: Garoll S.r.l., 25039 Travagliato (Brescia) (IT)
(72) Inventor: Vianello, Pietro, 25060 Cellatica (Brescia) (IT)
(74) Representative: Crippa, Paolo Ernesto

(56) References cited:
- EP-A- 0 317 720
- US-A- 4 500 274

## Description

The present invention relates to pressure die casting machines, in particular for manufacturing ceramic products, such as sanitary fixtures. More specifically, the object of the invention is a support equipment for a die for said machines.

The dies used in pressure die casting machines are usually attached to a mounting plate through which they are fitted on a die holder device which is part of the machine. More precisely, a die holder device supports at least a part of a die which once put into contact with another part of die attached to another die holder device, defines the actual die.

An example of a machine and method of this kind is shown in EP 0 317 720 A and discloses a support equipment for a die according to the pre-amble of claim 1.

For the two or more parts of a die to close perfectly, they must be perfectly aligned when they are fitted on the respective die holder devices. The alignment between the parts of a die usually occurs by adjusting the position of the mounting plate relative to the die holder device.

The need of allowing such adjustment is especially felt in the field of ceramic products as the dies used are made of a micro-porous resin and could therefore exhibit considerable dimensional variances, even in the range of a few millimetres.

Moreover, besides the ducts for introducing the casting material, such dies need to be connected to auxiliary circuits, such as those for compressed air, water, vacuum, etc.

In the practice, the following operations are currently needed to install and/or replace a die on the machine:

- placing the die parts onto respective die holders,

- checking any alignment errors between the die parts,

- carrying out the alignment between said parts, for example through screw systems,

- connecting the pipes of the auxiliary circuits to the die, for example through threaded unions,

- checking the adjustments made through trial manufacturing cycles,

- making any adjustments.

An example of a pressure die casting machine which allows to align two or more parts of a die by adjusting the position of a die mounting plate with respect a die holder is disclosed in IT-A-BS 990 048, in the name of the same Applicant.

However, the operations listed above on an average require eight-ten work hours and must be carried out each time a die is fitted on the machine.

The object of the present invention is to provide a support equipment for a die which should allow very quick installation and/or replacement thereof.

Such object is achieved by an equipment according to the appended claims.

To better understand the invention and appreciate its advantages, some exemplary non-limiting embodiments thereof are described below with reference to the annexed drawings, wherein:

figure 1 is a perspective view of a support equipment for a die according to the invention;

figure 2 is a perspective view of the equipment of figure 1 but for supporting two dies;

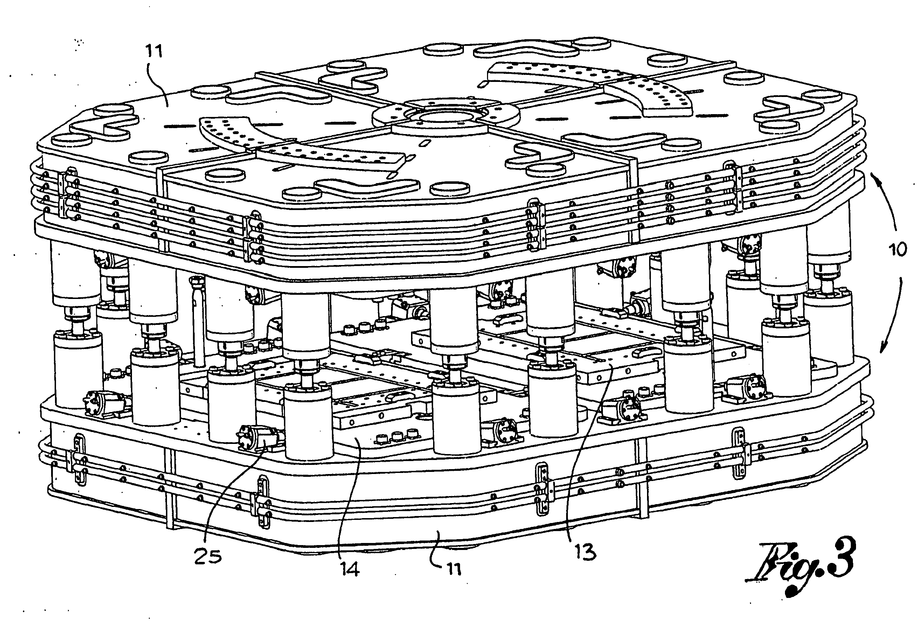

figure 3 shows the equipment of figure 2 with the die holder devices in closed configuration;

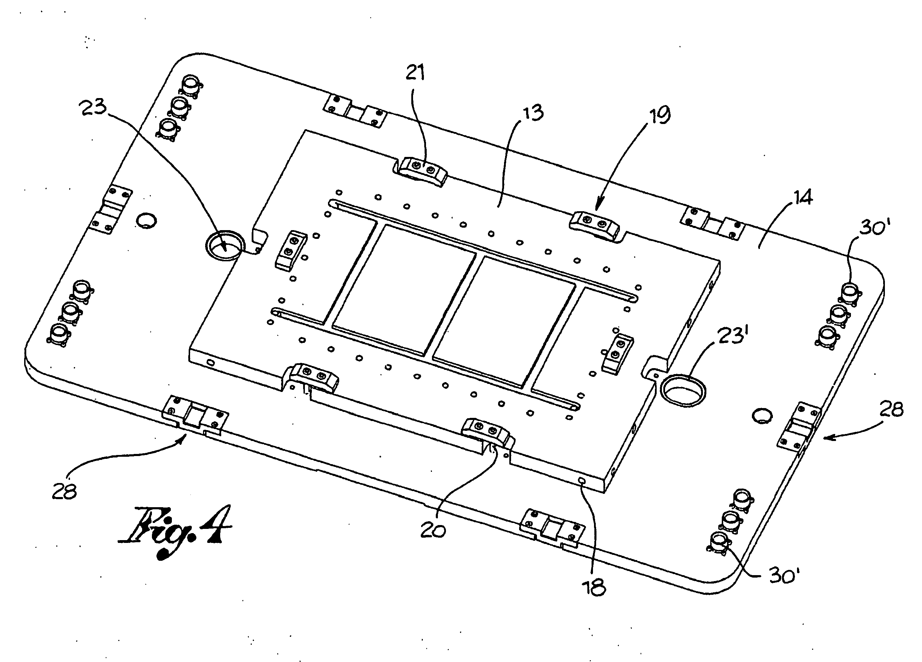

figure 4 shows a perspective view of the mounting plate of a die assembled to a counter plate according to the present invention;

figure 5 is a cutaway view of the support equipment at the level of the means for adjusting the position of the mounting plate relative to the counter plate;

figure 5a shows an enlarged detail of the adjustment means of figure 5;

figure 5b shows a cross section view of the adjustment means of figure 5a;

figure 6 is a cutaway view of the support equipment at the level of the means for locking the counter plate to the die holder device;

figure 7 is a cutaway view of the support equipment at the level of the quick connection unions provided on the die holder device and on the counter plate; and

figure 8 shows a perspective view of a part of two die holder devices and relevant parts of closed dies.

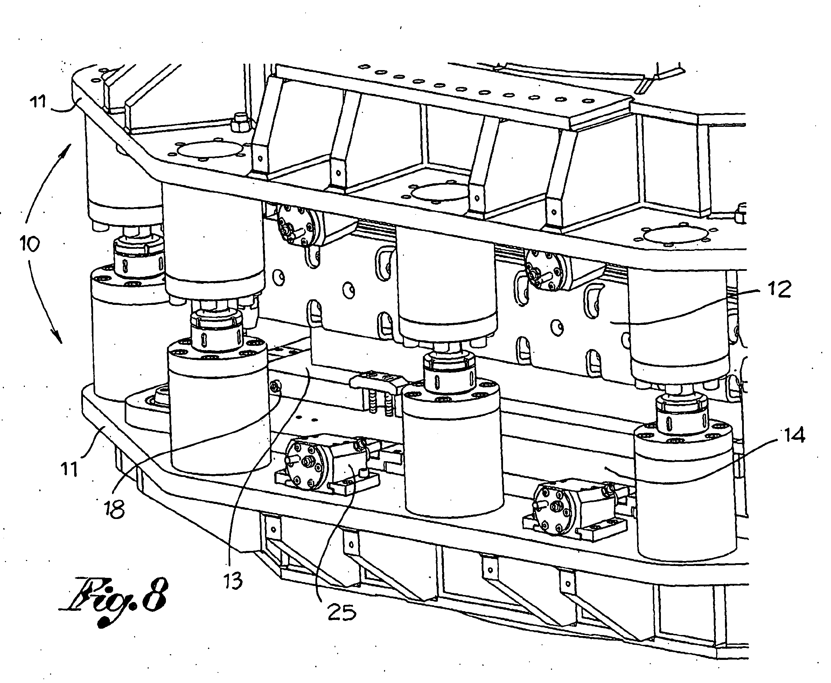

With reference to the figures, reference numeral 10 globally indicates a support equipment for at least one die 12 (shown in figure 8) for a pressure die casting machine, for example for manufacturing ceramic products such as sanitary fixtures.

Said equipment 10 comprises at least one die holder device 11 intended for moving at least one respective die 12. For simplicity of description, in the following description die 12 means a part of a die, or half die, which once coupled with at least one further part of a die, defines a recess intended for being filled with the casting material, for example a ceramic mixture. Die 12 is for example made of a micro-porous resin.

Die 12 is attached, for example by screwing, to a mounting plate 13 suitable for being attached to the die holder device 11.

The idea at the basis of the present invention is to provide for a counter plate 14 suitable for being arranged between the mounting plate 13 and the die holder device 11 so that the mounting plate 13, with the relevant die 12, is attached to said counter plate 14 with the possibility of adjusting the position thereof so that it is aligned with a facing die, while the counter plate 14 is locked to the die holder device 11 in a predetermined fixed position.

The mounting plate 13 and the die holder device 11 are specifically equipped and configured to interface with said counter plate 14 to achieve the object mentioned above. The die holder device 11 modified as described hereinafter, the counter plate 14 and the mounting plate 13, expressly modified as well, make up a new support equipment 10 for die 12 especially suitable for allowing a surprisingly quick assembly and/or replacement thereof.

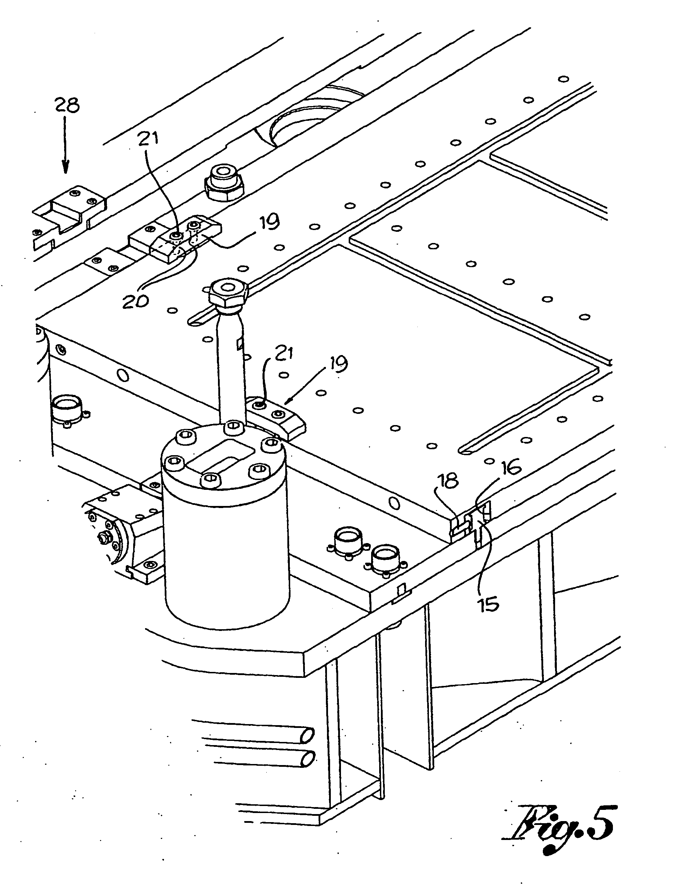

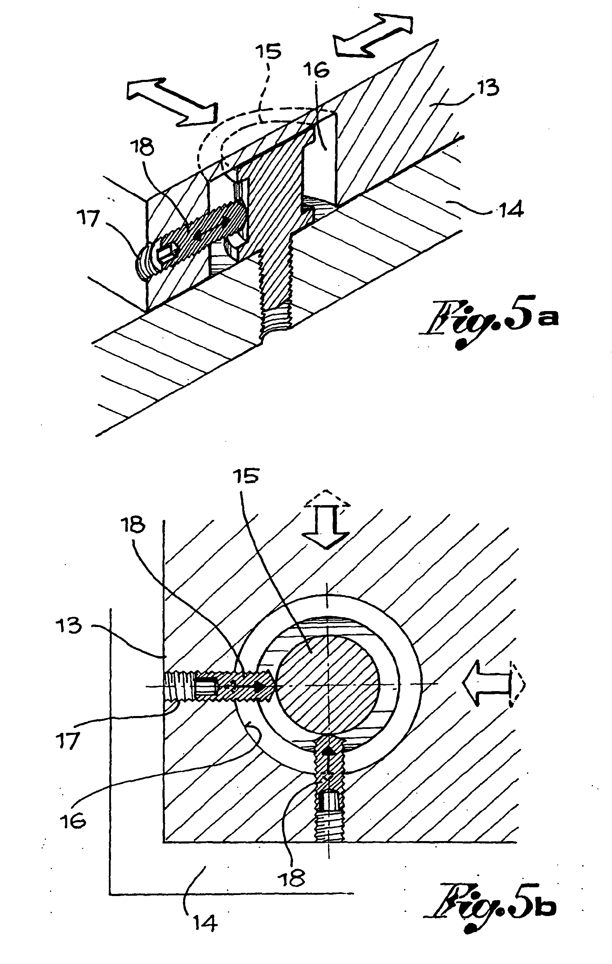

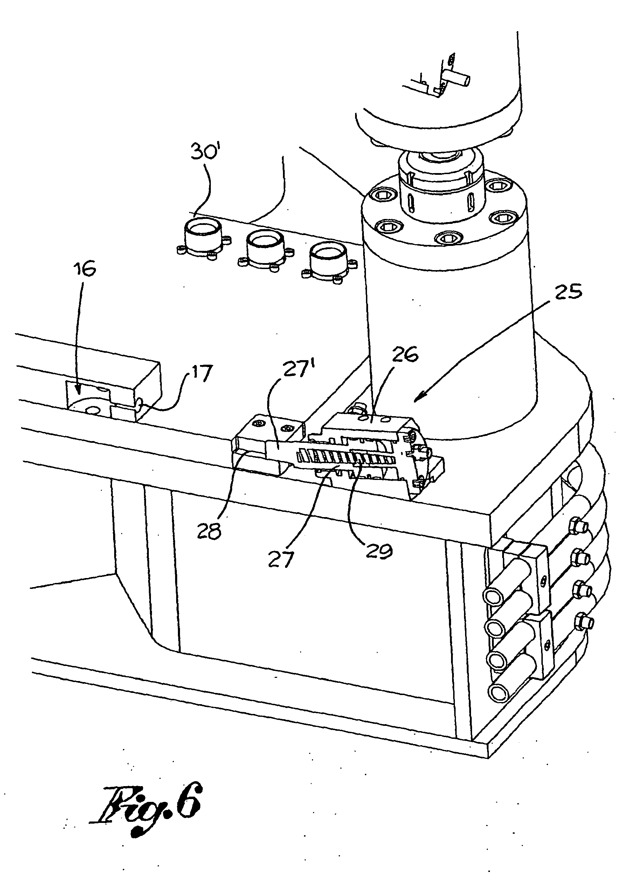

In accordance with an embodiment, a plurality of abutment pins 15, for example mushroom shaped, extends from the counter plate 14. Correspondingly, in the mounting plate 13 there is obtained a plurality of seats 16 (figures 5 and 6), each suitable for seating with clearance a respective abutment pin 15. Seating with clearance means that the width of seat 16 is considerably larger than the section of the abutment pin 15. For example, considering a pin 15 with a round head, seat 16 exhibits a diameter of even a few millimetres greater than the diameter of said head. Said seats 16 are for example shaped as blind holes opened towards the counter plate 14, that is, at the side opposite die 12.

Each of said seats 16 communicates with at least one threaded hole 17 wherein there is screwed an adjustment dowel 18 suitable for transversally engaging a respective abutment pin 15 for adjusting the position of the mounting plate 13 relative to the counter plate 14.

Advantageously, the abutment pins 15 and seats 16 are provided at a peripheral position in the respective counter plate 14 and mounting plate 13, so that the adjustment dowels 18 are accessible from the side surfaces of the mounting plate 13.

Preferably, the mounting plate 13 has a rectangular shape, seats 16 for the abutment pins 15 being provided in the proximity of the vertexes. Advantageously, therefore, each pin is associated with two adjustment dowels 18 orthogonal to one another.

Even though the connection between the adjustment dowels 18 and the abutment pins 15 could be suitable, besides the adjustment of the position of the mounting plate 13 relative to the counter plate 14, also for allowing the lock of the first to the second one, a particularly advantageous embodiment of the equipment according to the present invention provides for the use of special locking brackets 19 suitable for being attached to the counter plate 14 for holding the mounting plate 13 in abutment with said counter plate 14. More in detail, each of said brackets comprises at least one threaded stem 20, preferably two, suitable for being screwed to the counter plate, and a head 21 suitable for abutting on the face of the mounting plate 13 opposite the counter plate 14.

In other words, once the position of the mounting plate 13 has been adjusted, for example through the adjustment dowels 18, said mounting plate is firmly locked in the selected position screwing the locking brackets 19 thoroughly to the counter plate until the mounting plate is firmly abutted on said counter plate.

Advantageously, said locking brackets 19 are positioned so as to act on the edges of the mounting plate 13.

To connect the counter plate 14 to the die holder device 11, the latter is provided with a plurality of centring pins 22 suitable for inserting with a geometrical coupling into respective openings 23 obtained in the counter plate 14.

By insertion with geometrical coupling it is meant that the pins are very precisely inserted into the openings of the counter plate, that is, without any clearance. In fact, the counter plate 14 must be mountable on the die holder device 11 always in the same position.

To this end, to limit the wear and thus always ensure the same positioning of the counter plate, the surfaces thereof that delimit openings 23 are advantageously coated with a bushing 23' of hardened steel.

Advantageously, openings 23 are obtained in a peripheral position in the counter plate 14.

According to an embodiment, also the counter plate 14 exhibits a rectangular shape.

To lock the counter plate 14 to the die holder device 11, a plurality of quick cylinder bracketing units 25 is fitted on the latter.

Each of said units 25 exhibits a body 26 attached in peripheral position on the die holder device 11 and a stem 27 facing inside said die holder device 11 and suitable for engaging the counter plate 14. The quick bracketing units 25, whose number depends on the size of the die, are arranged around the counter plate 14.

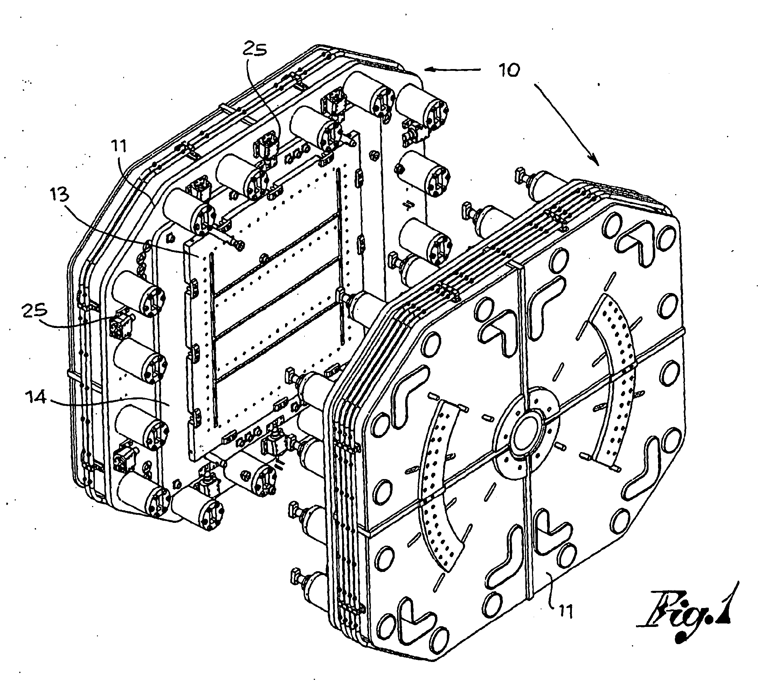

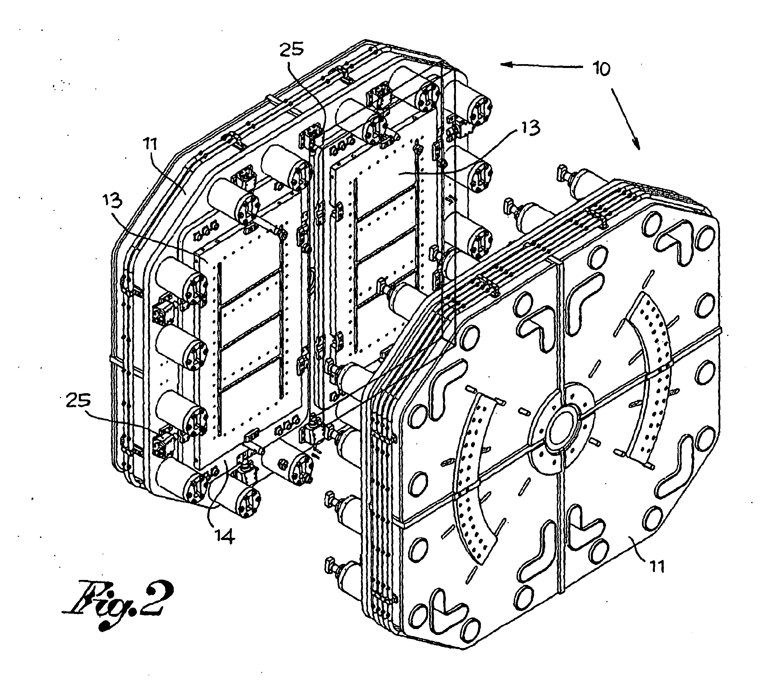

Figure 2 shows the same die holder device 11 of figure 1, but with two counter plates 14 for respective dies mounted thereon. The number and arrangement of the quick bracketing units 25 allows locking a single or both the counter plates 14.

In accordance with a preferred embodiment, stem 27 of said units 25 is movable along an inclined direction relative to the plane defined by the counter plate 14, in particular from top to the bottom, so as to generate a binding action between said stem 27 and said counter plate 14. In other words, the force with which stem 27 incises the counter plate 14 can be decomposed into an orthogonal component and into a parallel component relative to the counter plate 14. In this way, whatever the position of the die holder device 11, stem 27 can never move back due to the weight of the counter plate 14. Moreover, advantageously, each stem 27 exhibits a flat head 27' for the abutment on the counter plate 14.

In accordance with an advantageous embodiment, in the counter plate 14 there are provided special abutment seats 28 for the head of stem 27. Preferably, each seat 28 is coated with a hardened steel block.

According to a preferred embodiment, the quick bracketing units 25 are hydraulically actuated, for example double effect. Advantageously, stem 27 is normally further kept in an advanced locking position of the counter plate 14 by an elastic means 29, such as a helical spring with rectangular section.

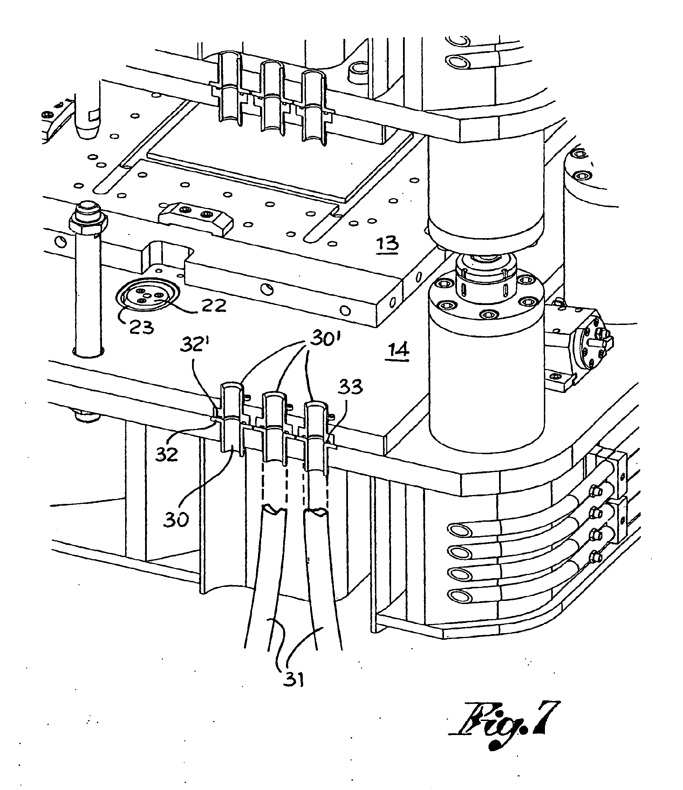

According to a further aspect of the invention (in particular, figure 7), the die holder device 11 is provided with quick connection unions 30 to pipes 31 of auxiliary circuits, for example of compressed air, water, vacuum, to be connected to the die and coming from the pressure die casting machine. In particular, said unions 30 exhibit the end of connection to pipes 31 facing the side opposite the counter plate 14.

Similarly, also the counter plate 14 is provided with quick connection unions 30' for pipes of auxiliary circuits to be connected to the die. In particular, unions 30' in the counter plate 14 exhibit the end of connection to pipes facing the die.

Advantageously, unions 30 of the die holder device and unions 30' of the counter plate are provided in such positions as to be in fluid communication when the counter plate 14 is mounted on the die holder device 11. Even more advantageously, said unions 30, 30' exhibit facing flat surfaces 32, 32' suitable for being placed one against the other with the interposition of at least one sealing element 33. In this way, the connection between pipes 31 coming from the machine and pipes connected to the die is obtained by simply abutting the counter plate 14 on the die holder device 11. The two annular flat surfaces 32, 32' and the sealing element interposed thereinbetween 33 ensure the front seal of the connection.

It should be noted that even in the case of a non-prefect alignment between unions 30 and 30', the fluid passage and the connection seal are ensured.

Finally, it should be noted that the counter plate 14, for example made of aluminium, exhibits a greater extension than the mounting plate 13 since it needs a free peripheral portion on which the stems of the quick bracketing units 25 act and carrying the quick connection unions 30' to the pipes of the auxiliary circuits.

To mount a new die on the die holder device 11, the die is attached to the mounting plate 13 both mechanically, for example by screwing, and in fluid connection, by connecting pipes on one side to special unions provided in the die and on the other side to the quick connection unions 30' provided in the mounting plate 13. The latter is then constrained to the counter plate 14. The counter plate 14 is then mounted on the die holder device 11 in a precise and predetermined position given by the centring means between the two devices. The locking of the counter plate 14 occurs by actuating the quick bracketing units 25. At this point, the position of the mounting plate 13 is adjusted relative to the counter plate through the adjustment means described above, that is, by manually turning the adjustment dowels 18.

Once the part of die on the mounting plate 13 is aligned with the corresponding part of die on the machine, the mounting plate 13 is locked into position by the fixing brackets 19.

It should be noted that the mechanical connection between the counter plate 14 and the die holder device 11 also realises the fluid connection of the auxiliary circuits.

When it is necessary to remove the die from the machine, it is sufficient to release the quick bracketing units 25; at the same time, and without any additional operation, also pipes 31 connected to the die holder device 11 and pipes connected to the counter plate 14 are disconnected from one another. The set of counter plate 14, mounting plate 13 and die is removed from the machine without influencing the relative position between the mounting plate and the counter plate. The die and the relevant mounting plate are then stored connected to the counter plate 14. In other words, after the die and the relevant mounting plate 13 are associated a first time to the counter plate 14, the latter becomes an integral part of the die for the next usages. In particular, the adjustment of the position of the mounting plate 13 carried out the first time is kept unchanged for the entire life of the die.

Every time the die must be placed in the machine again, it is therefore sufficient to attach the counter plate 14 to the die holder device 11. Since the counter plate 14 is mounted on said device always in the same position thanks to the centring means, the die is automatically and immediately reinstalled in the same position decided upon the first installation.

It is evident that a man skilled in the art may make several changes and adjustments to the die changing equipment according to the present invention in order to meet specific and incidental needs, all falling within the scope of protection of the invention as defined in the following claims.

## Claims

1. A support equipment (10) for a die (12) for a pressure die casting machine, comprising:
- at least one mounting plate (13) suitable for receiving said die,
- at least one die holder device (11) suitable for being fitted onto said machine for moving said die, **characterised in that** it further comprises-
at least one counter plate (14) suitable for being arranged between said mounting plate (13) and said die holder device (11), where said mounting plate (13) and counter plate (14) are associated to first locking means (15-19) suitable for allowing a removable attachment of said mounting plate to said counter plate with the possibility of adjusting the position of said mounting plate, and where said counter plate (14) and die holder device (11) are associated to second locking means (22, 23, 25) suitable for allowing a removable attachment of said counter plate to said die holder device in a predetermined fixed position.

2. An equipment according to claim 1, wherein a plurality of abutment pins (15) extends from the counter plate and wherein in said mounting plate there is obtained a plurality of seats (16) suitable for seating with clearance respective abutment pins, each of said seats being associated to at least one adjustment dowel (18) suitable for transversally engaging in a respective abutment pin for adjusting the position of the mounting plate relative to the counter plate.

3. An equipment according to claim 2, wherein said seats in the mounting plate are blind holes.

4. An equipment according to claim 2 or 3, wherein said abutment pins and said seats are provided at a peripheral position in the respective counter plate and mounting plate, the adjustment dowels being accessible from the side surfaces of the mounting plate.

5. An equipment according to any one of claims 2 to 4, wherein each seat is associated to two adjustment dowels orthogonal to one another.

6. An equipment according to any one of the previous claims, comprising a plurality of fixing brackets (19) suitable for being constrained to the counter plate (14) for holding the mounting plate (13) in abutment on said counter plate (14).

7. An equipment according to claim 6, wherein said locking brackets (19) act on the edges of the mounting plate.

8. An equipment according to any one of the previous claims, wherein the die holder device (11) is provided with a plurality of centring pins (22), and wherein the counter plate exhibits a plurality of openings (23) suitable for geometrically connecting to said centring pins.

9. An equipment according to claim 8, wherein each of said openings is coated with a hardened steel bushing (23').

10. An equipment according to claim 8 or 9, wherein said openings are obtained in a peripheral position in the counter plate.

11. An equipment according to any one of the previous claims, wherein said second locking means comprise a plurality of cylinder bracketing units (25), each unit having a body (26) attached to the die holder device and a stem (27) engaging in the counter plate (14).

12. An equipment according to claim 11, wherein said stem is movable along an inclined direction relative to the plane defined by the counter plate, so as to generate a binding action between said stem and said counter plate.

13. An equipment according to claim 12, wherein in the counter plate there are provided abutment seats (28) for the stems of the bracketing units.

14. An equipment according to claim 13, wherein said seats are coated with a hardened steel block.

15. An equipment according to any one of claims 11 to 14, wherein the stem of each bracketing unit exhibits a flat head (27') of abutment on the counter plate.

16. An equipment according to any one of claims 11 to 15, wherein said cylinder bracketing units are hydraulically actuated.

17. An equipment according to any one of claims 11 to 16, wherein the stem of said cylinder bracketing units is normally kept in advanced bracketing position by an elastic means.

18. An equipment according to claim 17, wherein said elastic means is a helical spring with rectangular section.

19. An equipment according to any one of the previous claims, wherein the die holder device is provided with quick connection unions (30) to pipes (31) of auxiliary circuits to be connected to the die coming from the pressure die casting machine.

20. An equipment according to any one of the previous claims, wherein the counter plate is provided with quick connection unions (30') to pipes of auxiliary circuits to be connected to the die.

21. An equipment according to claims 19 and 20, wherein the unions of the die holder device and the unions of the counter plate are provided in such positions as to be in fluid communication when the counter plate is mounted on the die holder device.

22. An equipment according to claim 21, wherein the unions of the die holder device and the unions of the counter plate exhibit facing flat surfaces (32, 32') suitable for being placed one against the other with the interposition of at least one sealing element (33).

23. An equipment according to any one of the previous claims, wherein the counter plate is made of aluminium.

24. A pressure die casting machine comprising at least a support equipment (10) for a die (12) according to anyone of the previous clams.

25. A pressure die casting machine according to claim 24, wherein said die holder device (11) is provided with quick connection unions (30) for the connection of pipes (31) from said machine, said unions being open towards said counter plate.

26. A method for adjusting the position of a mounting plate (13) of a die (12) on a die holder device (11) of a pressure die casting machine, comprising the steps of:
- providing a counter plate (14) suitable for being locked to said die holder device in a predetermined fixed position;
- locking said counter plate to said die holder device;
- connecting said mounting plate (13) to said counter plate;
- adjusting the position of said mounting plate relative to said counter plate;
- locking the mounting plate to the counter plate in the desired position.

## Patentansprüche

1. Tragvorrichtung (10) für ein Formwerkzeug (12) für eine Druckgießmaschine, umfassend:
- zumindest eine Befestigungsplatte (13), die zur Aufnahme des Formwerkzeugs ge-eignet ist,
- zumindest eine Formwerkzeughalteeinrichtung (11), die dazu geeignet ist, auf der Maschine angebracht zu sein, um das Formwerkzeug zu bewegen,
**dadurch gekennzeichnet, dass** sie weiter umfasst zumindest eine Gegenplatte (14), die dazu geeignet ist, zwischen der Befestigungs-platte (13) und der Formwerkzeughalteeinrichtung (11) angeordnet zu sein, wo die Befestigungsplatte (13) und die Gegenplatte (14) ersten Befestigungsmitteln (15-19) zugeordnet sind, die dazu geeignet sind, eine lösbare Befestigung der Befestigungs-platte mit der Gegenplatte zu erlauben, mit der Möglichkeit die Position der Befesti-gungsplatte einzustellen, und wo die Gegenplatte (14) und die Formwerkzeughalte-einrichtung (11) zweiten Befestigungsmitteln (22, 23, 25) zugeordnet sind, die dazu geeignet sind, eine lösbare Befestigung der Gegenplatte mit der Formwerkzeughal-teeinrichtung in einer vorbestimmten festen Position bzw. Befestigungsposition zu erlauben.

2. Vorrichtung nach Anspruch 1, wobei eine Vielzahl von Stütz- bzw. Anlagesti-fen (15) von der Gegenplatte ragen und wobei in der Befestigungsplatte eine Vielzahl von Passungen bzw. Sitzen (16) erreicht werden, die dazu geeignet sind, die ent-sprechenden Auflagestifte mit Abstand zu lagern bzw. einzupassen, wobei jeder der Sitze zumindest einem Einstellungsstift bzw. -dorn (18) zugeordnet ist, der dazu ge-eignet ist, transversal in einen entsprechenden Anlagestift einzugreifen, um die Posi-tion der Befestigungsplatte relativ zu der Gegenplatte einzustellen.

3. Vorrichtung nach Anspruch 2, wobei die Sitze in der Befestigungsplatte Sack-löcher sind.

4. Vorrichtung nach Anspruch 2 oder 3, wobei die Anlagestifte und die Sitze an einer peripheren Position bzw. Umfangsposition in der entsprechenden Gegenplatte und der Befestigungsplatte vorgesehen sind, wobei die Einstellungsdorne von den Seitenflächen der Befestigungsplatte zugänglich sind.

5. Vorrichtung nach einem der Ansprüche 2 bis 4, wobei jeder Sitze zwei Aus-richtungsstiften zugeordnet ist, die orthogonal zueinander sind.

6. Vorrichtung nach einem der vorhergehenden Ansprüche, umfassend eine Vielzahl von Befestigungsklammern (19), die dazu geeignet sind, an die Gegenplatte (14) gespannt bzw. mit dieser befestigt zu sein, um die Befestigungsplatte (13) in Anlage auf der Gegenplatte (14) zu halten.

7. Vorrichtung nach Anspruch 6, wobei die Bestigungsklammern (19) auf die Kanten bzw. Ränder der Befestigungsplatte einwirken.

8. Vorrichtung nach einem der vorhergehenden Ansprüche, wobei die Form-werkzeughalteeinrichtung (11) mit einer Vielzahl von Zentrierstiften (22) bereitgestellt wird, und wobei die Gegenplatte eine Vielzahl von Öffnungen (23) aufweist, die dazu geeignet sind, mit den Zentrierstiften geometrisch verbunden zu sein.

9. Vorrichtung nach Anspruch 8, wobei jede der Öffnungen mit einer Buchse (23') aus gehärtetem Stahl ummantelt ist.

10. Vorrichtung nach Anspruch 8 oder 9, wobei die Öffnungen in einer peripheren Position bzw. Umfangsposition in der Gegenplatte erreicht werden.

11. Vorrichtung nach einem der vorhergehenden Ansprüche, wobei die zweiten Verbindungsmittel eine Vielzahl von Zylinderhalteeinheiten (25) umfassen, wobei je-de Einheit einen Körper (26) aufweist, der an der Formwerkzeughalteeinrichtung und an einem Schaft (27), der in die Gegenplatte (14) eingreift, angebracht ist.

12. Vorrichtung nach Anspruch 11, wobei der Schaft entlang einer geneigten Rich-tung relativ zu der Ebene, die durch die Gegenplatte definiert ist, beweglich ist, um eine Bindungswirkung zwischen dem Schaft und der Gegenplatte zu erzeugen.

13. Vorrichtung nach Anspruch 12, wobei in der Gegenplatte Anlagesitze (28) für die Schäfte der Halteeinheiten vorgesehen sind.

14. Vorrichtung nach Anspruch 13, wobei die Sitze mit einem Hartstahlblock be-schichtet sind.

15. Vorrichtung nach einem der Ansprüche 11 bis 14, wobei der Schaft jeder Hal-teeinheit einen flachen Halte- bzw. Anlagekopf (27') auf der Gegenplatte aufweist.

16. Vorrichtung nach einem der Ansprüche 11 bis 15, wobei die Zylinderhalteein-heiten hydraulisch betätigt werden.

17. Vorrichtung nach einem der Ansprüche 11 bis 16, wobei der Schaft der Zylin-derhalteeinheiten normalerweise in einer vorgerückten Halteposition mittels eines elastischen Mittels gehalten wird.

18. Vorrichtung nach Anspruch 17, wobei das elastische Mittel eine spiralförmige Feder mit rechteckigen Abschnitten ist.

19. Vorrichtung nach einem der vorhergehenden Ansprüche, wobei die Form-werkzeughalteeinrichtung mit Schnellverbindungselementen (30) zu Rohren (31) von Hilfskreisläufen bereitgestellt ist, um mit dem Formwerkzeug, das von der Druck-gießmaschine kommt, verbunden zu sein.

20. Vorrichtung nach einem der vorhergehenden Ansprüche, wobei die Gegen-platte mit Schnellverbindungselementen (30') zu Rohren von Hilfskreisläufen bereit-gestellt ist, um mit dem Formwerkzeug verbunden zu sein.

21. Vorrichtung nach den Ansprüchen 19 und 20, wobei die Elemente der Form-werkzeughalteeinrichtung und die Elemente der Gegenplatte in solchen Positionen bereitgestellt sind, um in Fluidkommunikation zu sein, wenn die Gegenplatte auf der Formwerkzeughalteeinrichtung angebracht ist.

22. Vorrichtung nach Anspruch 21, wobei die Elemente der Formwerkzeughalte-einrichtung und die Elemente der Gegenplatte einander zugewandte flache Flächen (32, 32') aufweisen, die dazu geeignet sind, gegeneinander mit der Einfügung von wenigstens einem Dichtungselement (33) angeordnet zu sein.

23. Vorrichtung nach einem der vorhergehenden Ansprüche, wobei die Gegen-platte aus Aluminium hergestellt ist.

24. Druckgießmaschine umfassend wenigstens eine Tragvorrichtung (10) für ein Formwerkzeug (12) nach einem der vorhergehenden Ansprüche.

25. Druckgießmaschine nach Anspruch 24, wobei die Formwerkzeughalteeinrich-tung (11) mit Schnellverbindungselementen zur Verbindung zu Rohren der Maschine bereitgestellt ist, wobei die Elemente in Richtung der Gegenplatte offen sind.

26. Verfahren zur Einstellung der Position einer Befestigungsplatte (13) eines Formwerkzeugs (12) an einer Formwerkzeughalteeinrichtung (11) einer Druckgießmaschine, umfassend die Schritte:
- Bereitstellen einer Gegenplatte (14), die dazu geeignet ist, mit der Formwerkzeug-halteeinrichtung in einer vorbestimmten Position verriegelt zu sein;
- Verriegelnd der Gegenplatte mit der Formwerkzeughalteeinrichtung;
- Verbinden der Befestigungsplatte (13) mit der Gegenplatte;
- Einstellen der Position der Befestigungsplatte relativ zu der Gegenplatte;
- Verriegeln der Befestigungsplatte mit der Gegenplatte in der gewünschten Position.

## Revendications

1. Equipement de support (10) pour un moule (12) d'une machine de moulage sous pression, comprenant :
- au moins une plaque de montage (13) adaptée pour recevoir ledit moule,
- au moins un dispositif de maintien du moule (11) adapté pour être monté sur ladite machine pour déplacer ledit moule,
**caractérisé en ce qu'**il comprend de plus au moins une contre-plaque (14) adaptée pour être agencée entre ladite plaque de montage (13) et ledit dispositif de maintien du moule (11), où ladite plaque de montage (13) et ladite contre-plaque (14) sont associées à des premiers moyens de blocage (15-19) adaptés pour permettre une fixation amovible de ladite plaque de montage à ladite contre-plaque avec la possibilité de régler la position de ladite plaque de montage, et où ladite contre-plaque (14) et ledit dispositif de maintien du moule (11) sont associés à des seconds moyens de blocage (22, 23, 25) adaptés pour permettre une fixation amovible de ladite contre-plaque audit dispositif de maintien du moule dans une position fixe prédéterminée.

2. Equipement selon la revendication 1, dans lequel une pluralité de pions de butée (15) s'étendent de la contre-plaque et dans lequel, dans ladite plaque de montage, il est prévu une pluralité de sièges (16) adaptés pour recevoir avec jeu des pions de butée respectifs, chacun desdits sièges étant associé à au moins un élément de réglage (18) adapté pour s'engager transversalement dans un pion de butée respectif pour régler la position de la plaque de montage par rapport à la contre-plaque.

3. Equipement selon la revendication 2, dans lequel lesdits sièges dans la plaque de montage sont des trous borgnes.

4. Equipement selon la revendication 2 ou 3, dans lequel lesdits pions de butée et lesdits sièges sont prévus en position périphérique dans la contre-plaque et la plaque de montage respectives, les éléments de réglage étant accessibles depuis les surfaces latérales de la plaque de montage.

5. Equipement selon une quelconque des revendications 2 à 4, dans lequel chaque siège est associé à deux éléments de réglage orthogonaux l'un par rapport à l'autre.

6. Equipement selon une quelconque des revendications précédentes, comprenant une pluralité de brides de fixation (19) adaptées pour s'appliquer sur la contre-plaque (14) pour maintenir la plaque de montage (13) en butée sur ladite contre-plaque (14).

7. Equipement selon la revendication 6, dans lequel lesdites brides de blocage (19) agissent sur les bords de la plaque de montage.

8. Equipement selon une quelconque des revendications précédentes, dans lequel le dispositif de maintien du moule (11) est muni d'une pluralité d'axes de centrage (22), et dans lequel ladite contre-plaque montre une pluralité d'ouvertures (23) agencées pour se lier géométriquement auxdits axes de centrage.

9. Equipement selon la revendication 8, dans lequel chacune desdites ouvertures est revêtue d'une douille en acier trempé (23').

10. Equipement selon la revendication 8 ou 9, dans lequel lesdites ouvertures sont obtenues en position périphérique dans la contre-plaque.

11. Equipement selon une quelconque des revendications précédentes, dans lequel lesdits seconds moyens de blocage comprennent une pluralité d'unités de bridage à cylindre (25), chaque unité ayant un corps (26) fixé au dispositif de maintien du moule et une tige (27) s'engageant dans la contre-plaque (14).

12. Equipement selon la revendication 11, dans lequel ladite tige est mobile le long d'une direction inclinée par rapport au plan défini par la contre-plaque, de façon à engendrer une action de talonnement entre ladite tige et ladite contre-plaque.

13. Equipement selon la revendication 12, dans lequel dans la contre-plaque sont prévus des sièges de butée (28) pour les tiges des unités de bridage.

14. Equipement selon la revendication 13, dans lequel lesdits sièges sont revêtus d'un bloc en acier trempé.

15. Equipement selon une quelconque des revendications 11 à 14, dans lequel la tige de chaque unité de bridage montre une tête plate (27') de butée sur la contre-plaque.

16. Equipement selon une quelconque des revendications 11 à 15, dans lequel lesdites unités de bridage à cylindre sont actionnées hydrauliquement.

17. Equipement selon une quelconque des revendications 11 à 16, dans lequel la tige desdites unités de bridage à cylindre est normalement maintenue dans une position de bridage avancée par des moyens élastiques.

18. Equipement selon la revendication 17, dans lequel lesdits moyens élastiques sont un ressort hélicoïdal ayant une section rectangulaire.

19. Equipement selon une quelconque des revendications précédentes, dans lequel le dispositif de maintien du moule est muni de raccords à connexion rapide (30) à des tuyaux (31) de circuits auxiliaires à relier au moule provenant de la machine de moulage sous pression.

20. Equipement selon une quelconque des revendications précédentes, dans lequel la contre-plaque est munie de raccords à connexion rapide (30') à des tuyaux de circuits auxiliaires à relier au moule.

21. Equipement selon les revendications 19 et 20, dans lequel les raccords du dispositif de maintien du moule et les raccords de la contre-plaque sont prévus dans des positions telles à être en communication fluidique quand la contre-plaque est montée sur le dispositif de maintien du moule.

22. Equipement selon la revendication 21, dans lequel les raccords du dispositif de maintien du moule et les raccords de la contre-plaque montrent des surfaces planes se faisant face (32, 32') agencées pour se placer l'une contre l'autre avec l'interposition d'au moins un élément d'étanchéité (33).

23. Equipement selon une quelconque des revendications précédentes, dans lequel la contre-plaque est réalisée en aluminium.

24. Machine de moulage sous pression comprenant au moins un équipement de support (10) pour un moule (12) selon une quelconque des revendications précédentes.

25. Machine de moulage sous pression selon la revendication 24, dans laquelle ledit dispositif de maintien du moule (11) est muni de raccords à connexion rapide (30) pour la liaison de tuyaux (31) provenant de ladite machine, lesdits raccords étant ouverts vers ladite contre-plaque.

26. Procédé pour régler la position d'une plaque de montage (13) d'un moule (12) sur un dispositif de maintien du moule (11) d'une machine de moulage sous pression, comprenant les étapes de :
- fournir une contre-plaque (14) adaptée pour se bloquer sur ledit dispositif de maintien du moule dans une position fixe prédéterminée ;
- bloquer ladite contre-plaque audit dispositif de maintien du moule ;
- relier ladite plaque de montage (13) à ladite contre-plaque ;
- régler la position de ladite plaque de montage par rapport à ladite contre-plaque ;
- bloquer la plaque de montage sur la contre-plaque dans la position souhaitée.
